# EUROPEAN PATENT SPECIFICATION

(11) **EP 1 507 671 B1**
(45) Date of publication and mention of the grant of the patent: **15.11.2006**
(21) Application number: 03728202.7
(22) Date of filing: 22.05.2003
(51) Int. Cl.: B60F 1/04

(54) **A VEHICLE THAT CAN BE DRIVEN ON BOTH ROADS AND RAILROAD TRACKS**
SOWOHL AUF STRASSEN ALS AUCH AUF EISENBAHNSCHIENEN FAHRBARES FAHRZEUG
VEHICULE POUVANT ROULER SUR LA ROUTE ET SUR DES RAILS DE CHEMIN DE FER

(30) Priority: 24.05.2002 SE 0201554
(43) Date of publication of application: 23.02.2005
(73) Proprietor: AB SJÖLANDERS SMIDES & MEKANISKA VERKSTAD, 283 23 Osby (SE)
(72) Inventor: ASTRÖM, Jan, S-283 33 Osby (SE)
(74) Representative: Estreen, Lars J.F.
(86) International application number: PCT/SE2003/000831
(87) International publication number: WO 2003/099593

(56) References cited:
- EP-A2- 0 337 437
- US-A- 3 910 601
- US-A- 4 048 925
- US-A- 4 103 622

## Description

### FIELD OF THE INVENTION

The present invention relates to a vehicle, in particular a semitrailer, for operation on both road and railroad track, and more specifically of the kind defined in the preamble of Claim 1.

A vehicle that can be driven on both roads and railroad tracks is known to the art; see, for instance, SE,B,7506711-6 (Publication No. 402 343) (Storm) and its American counterpart U.S.-A 4,048,925.

A lighter vehicle, for instance a delivery van or a corresponding vehicle, that can be driven on both roads and railroad tracks is described in SE,C,9401479-2 (Publication No. 502 692) (SRS et al) and its international counterpart WO-A-95/29822, which is considered to represent the closest prior art.

Hitherto, it has not been considered possible to equip truly large and heavy vehicles of the semitrailer type for both road and railroad operation.

The difficulties encountered in this regard have mainly been associated with the understanding that the significant length of the vehicle and the occurrence of leading swivel axle or kingpin between the traction vehicle and the trailer would render impossible an adjustment between the different driving modes, and particularly driving of the vehicle on railroad tracks. The invention, however, provides a simple way of avoiding this difficulty.

### OBJECT OF THE INVENTION

Accordingly, a main object of the present invention is to provide a very long and heavy road vehicle of the semitrailer type with the elements necessary to enable said vehicle to be driven on railroad tracks.

### SUMMARY OF THE INVENTION

This and other objects is/are fulfilled by a vehicle of the kind that includes the features set forth in the characterising clause of Claim 1.

The invention is based on the insight that the vertical articulated axle with which the trailer part is connected to the traction vehicle can be used for both driving the vehicle onto the railroad track in conjunction with adapting the vehicle for railroad operation and in conjunction with driving from the railroad track when the vehicle shall be converted from a railroad-driving mode to a road-driving mode. It is normally sufficient to use only one railroad-wheel equipped unit on the trailer, in addition to the two rail-wheel equipped unit, which according to the present standpoint of techniques are applied to a vehicle equipped with drive motor and road wheels, in this case the traction or towing vehicle, namely when said railroad-wheel equipped unit is arranged behind the road wheels of the semitrailer.

Despite the semitrailer being extremely heavy in its entirety, particularly when fully loaded, and having considerable length, the invention provides a particularly simple and convenient solution to the aforesaid problem.

It is preferred in practice that at least one of the two rear rail-wheel units is comprised of a bogie that includes two rail-wheel axles.

In this regard, preferably at least one of these will be provided with a vehicle drive motor, for use in conjunction with driving onto and from the track and partly in connection with track-bound traffic.

Particularly when the trailer is equipped with a rail-wheel unit that has only one axle, the unit is conveniently constructed in the manner described in the aforesaid earlier publication SE,C,9401479-2, i.e. a construction which includes an outwardly pivotal support element that includes an axle for a rail-wheel intended for engagement with the rails when driven up onto the rail track. This support element will conveniently be capable of being fixed in its use position.

Alternatively, or in addition, the rear rail-wheel unit on the traction vehicle may be equipped in a corresponding manner.

A particular advantage afforded by the present invention is that it enables many alternative designs to be achieved, and therewith offers significant flexibility with regard to the design of the rail-wheel equipped units.

Optionally, only one of these is equipped with drive means, although alternatively two and even three thereof may include such drive means.

Alternatively, or moreover, the driven road wheels may be used in a railroad-driving mode by engagement with the rails.

There is normally required a level crossing which is approximately level with the upper edge of the track, in connection with driving the semitrailer onto and off from the track.

Further characteristic features of the invention will be evident from the following description of several preferred exemplifying embodiments thereof, with reference to the accompanying drawings.

### BRIEF DESCRIPTION OF THE DRAWINGS

Fig. 1 is a side view of a semitrailer adapted for driving on a road in accordance with the present invention.
Fig. 2 is a side view illustrating the semitrailer of Fig. 1 adapted for driving on a railroad track.

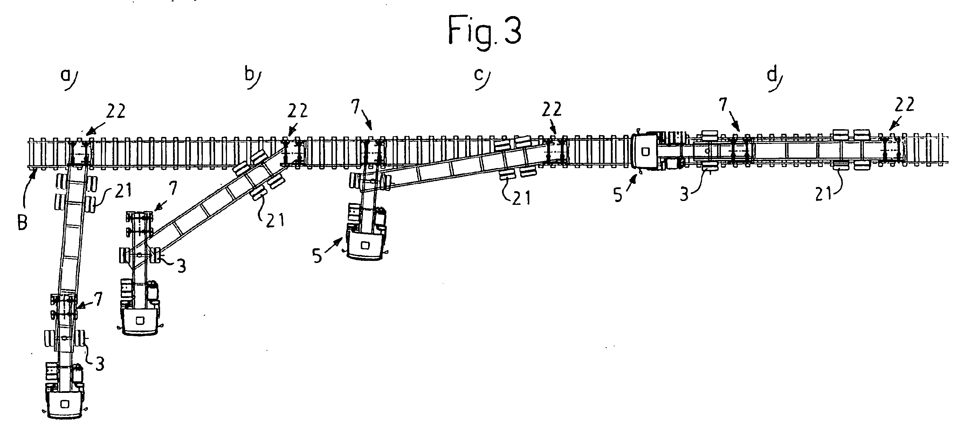

Sections Figures 3a), b), c) and d) are plan views illustrating the conversion of the vehicle from a road driving mode to a railroad track driving mode in conjunction with driving a semitrailer up onto a railroad track.

### DESCRIPTION OF PREFERRED EMBODIMENTS

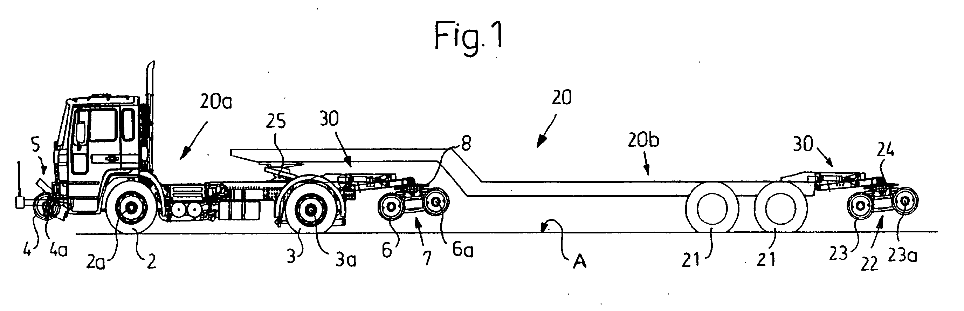

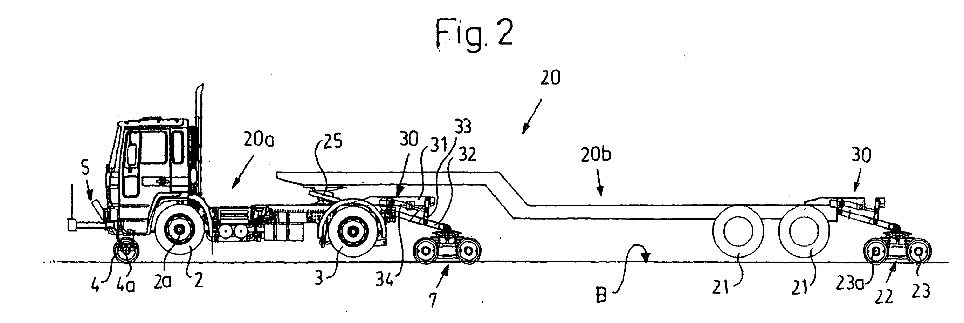

Figs. 1 and 2 show a semitrailer 20 adapted for driving on a road A and on a railroad track B respectively. The illustrated embodiment comprises two main parts, namely a traction vehicle 20a that has a truck chassis including an engine and front and rear road wheels 2, 3 mounted on axles 2a, 3a. The front road wheels 2 can be steered in a typical fashion.

The embodiment also includes a trailer 20b having rear road wheels 21, which are connected to the traction vehicle 20a by means of a vertically pivotal axle 25. In order to enable the semitrailer to be driven on railroad tracks, it includes three rail-wheel-equipped units 5, 7 and 22, of which two such units 5, 7 are mounted on the traction vehicle and one such unit 22 on the trailer.

In the case of the illustrated embodiment, the front rail-wheel unit 5 of the traction vehicle is equipped with a single axle 4a that carries rail wheels 4 and that is located in front of the front road-wheel axle 2a. Located between the rear road-wheel axle 3a is a bogie unit 7 that includes two rail-wheel axles 6a carrying rail wheels 6. The bogie unit 7 can be swung about a vertical shaft 8 and can be moved vertically with the aid of a lifting device 30, as described below.

The rail-wheel unit 22 of the trailer is comprised of a bogie of generally the same design as the rail-wheel unit 7. The bogie thus includes two rail-wheel axles 23a which carries rail wheels 23 and which can be swung about a vertical shaft 24. Also included is a lifting device 30 of the same kind as that at the "intermediate unit" 7.

All rail-wheel units 5, 7 and 22 are movable vertically for application of the rail wheels onto the rails and lifting of adjacent rubber wheels that are no longer in engagement with the road surface, e.g. when the semitrailer shall be driven up onto a track B.

It is also possible to lower the rear road wheels 3 with the aid of the lifting device 30 of the intermediate unit 7, when wishing to drive the semitrailer onto the rail track with the aid of said road wheels. When the traction vehicle is, e.g., a four-wheel drive, the front rubber wheels 2 may also be lowered into engagement with the tracks.

Lifting and lowering of a bogie unit 7, 22 in relation to the railroad tracks is achieved with the aid of a device 30 whose main part includes a fixed horizontal arm or jib 31, a pivotal bar 32, a pivotal link element 33 located between the arm and the bar, and an hydraulic device 34 which engages the central part of said link element and which is pivotally mounted at its other end.

A comparison between Figs. 1 and 2 will make apparent the movements carried out by the various elements between the raised position of the bogie units 7, 22 and the lowered track-engaging positions of respective bogie units.

The front single-axle rail-wheel unit 5 can also be moved into contact with the rails, e.g. with a more or less straight vertical movement.

One or both of the bogie units 7, 22 may, alternatively, be comprised of single-axle units, suitably including an outwardly pivotal rail-provided support element that can be fixed in its position of use.

The various actions carried out in conjunction with adapting the semitrailer from its road traffic mode to its railroad mode in conjunction with driving the semitrailer onto the railroad track will be evident from Fig. 3.

As shown in section a) of Fig. 3, the semitrailer 20 is reversed up to the railroad track with all rail-wheel units 5, 7, 22 in the position shown in Fig. 1, i.e. in a raised position.

When the rear rail-wheel unit 22 has taken the position shown in section a, the unit is turned to the position in which it is parallel with the track, whereupon the unit is lowered into contact with the track with the aid of the lifting device 30, so that the rear road wheels 21 of the trailer 20b will be raised.

The traction vehicle is then reversed further, via section b of said figure, to the position shown in section c of Fig. 3, in which the rail wheel unit 7 is located above the track. Rotation of the unit 7 to a parallel setting and application of the unit 7 against the track, is then effected in the same way as for the unit 22, wherewith the rear wheels 3 of the traction vehicle are lifted away from contact with the underlying surface, i.e. can no longer be used to further reverse the vehicle.

Instead, it is necessary that at least one of the rail wheel units 7 and 22 is equipped with drive means, which is used to further reverse the semitrailer while guiding the front road wheels 2 to the position shown in section d of Fig. 3.

The front single-axle rail wheel unit 5 will then lie in a parallel position over the track. The rail wheels 4 are brought into contact with the track and the traction vehicle lifted to the raised position shown in Fig. 2, i.e. the whole of the semitrailer 20 is track-bound with the use of all three rail-wheel units 5, 7, 22. The trailer can then be driven on the railroad track.

Driving of the semitrailer onto the railroad track requires a level crossing that is level with the upper edge of the track.

It will be understood that the rail-wheel unit 22 of the trailer need not be equipped with drive means.

In the absence of such drive means, the driving force in the road wheels of the traction vehicle is utilised until the "intermediate unit", i.e. the rear rail-wheel unit 7 of the traction vehicle, is in contact with the tracks. This rail unit 7 must include drive means capable of achieving continued driving of the trailer onto the track.

When the (rear) rail-wheel unit 22 of the trailer 20b is equipped with drive means, said means is used while steering the trailer with the front road wheels 2 of the traction vehicle 20a at the same time, until the "intermediate unit" 7 can be applied to the railroad track. The unit 7 can thereafter be used as "running bogie" during the continued sequence, in which the rear rail-wheel unit 22 continues the pulling operation.

When the entire semitrailer 20 has been placed on the rails of the railroad track, the trailer is then driven with the aid of the rear driving rail-wheel unit 22.

Alternatively, both rail-wheel units 7 and 22 may be equipped with a drive motor.

A further alternative is that all rail-wheel units 5, 7 and 22 can be driven.

The procedure undertaken to move the vehicle from the railroad track and convert it to its road-driving mode is carried out in the reverse order to that described above, i.e. in accordance with the sequence of events illustrated in sections d, c, b and a of Fig. 3 in that order, wherewith the front wheels 2 of the traction vehicle are used to angle the traction vehicle away from the railroad track while, at the same time, pushing forwards one of the rear rail-wheel units. The "intermediate unit" 7 can be lifted in the position of section c of said figure, therewith enabling the rear wheels 3 of the traction vehicle to be used for driving purposes.

In position 3a), the rear rail-wheel unit 22 is lifted finally, whereafter the vehicle is ready for road driving purposes.

Other vehicles that include mutually articulated parts can be equipped in a corresponding manner for conversion to railroad-bound traffic.

## Claims

1. A vehicle, particularly a so-called semitrailer (20), for driving both on a road (A) and a railroad track (B), said vehicle including a traction vehicle (20a) having a wheel chassis and front steerable wheel axles (2a) and a rear wheel axle (3a), both having road wheels (2, 3), and a front and a rear rail-wheel unit (5, 7) located respectively in front of the front wheels (2) and behind the rear wheels (3), wherein at least one of said units can be swung about a vertical shaft (8) and each of which units has at least one axle (4a, 6a) which carries rail wheels (4, 6) and which is movable vertically to bring the rail wheels (4, 6) into engagement with the railroad track (B), **characterised in that** a trailer (20b) provided at least with rear road wheels (21) is pivotally connected to the traction vehicle (20a) via a vertical rotatable axle (25) located in front of the rear rail-wheel unit (7) of the traction vehicle (20a); and **in that** the trailer (20b) includes behind the rear road wheels (21) a vertically movable third rail wheel unit (22) which can swing about a vertical axle (8) and which includes at least one axle (23a) carrying rail wheels (23).

2. A vehicle according to Claim 1, **characterised in that** at least one of the two rear rail-wheel units (7, 22) is comprised of a bogie that has two rail-wheel axles (6a, 23a).

3. A vehicle according to Claim 1 or 2, **characterised in that** at least one of the two rear rail-wheel units (7, 22) has a drive motor for driving at least one rail-wheel axle.

4. A vehicle according to any one of Claims 1-3, **characterised in that** at least one rail-wheel unit (5, 22), preferably a single-axle rail-wheel unit, includes an outwardly pivotal support element having an axle carrying a rail wheel for engagement with the rails when driving the vehicle onto the railroad track.

5. A vehicle according to Claim 4, **characterised in that** the rail-wheel unit provided with said support element can be fixated in its position parallel with the railroad track and with the longitudinal axis of the vehicle.

6. A vehicle according to Claim 1, **characterised in that** all rail-wheel units (5, 7, 22) are provided with drive means.

## Patentansprüche

1. Fahrzeug, insbesondere ein so genannter Sattelschlepper (20), zum Fahren sowohl auf einer Straße (A) als auch auf einem Bahngleis (B), wobei das Fahrzeug ein Zugfahrzeug (20a) mit einem Achsenfahrgestell und lenkbaren Vorderradachsen (2a) und einer Hinterradachse (3a), die beide Laufräder (2, 3) aufweisen, sowie eine vordere und eine hintere Eisenbahnradeinrichtung (5, 7), die jeweils vor den Vorderrädern (2) und hinter den Hinterrädern (3) angeordnet sind, umfasst, wobei mindestens eine der Einrichtungen um eine vertikale Welle (8) geschwenkt werden kann und jede der Einrichtungen mindestens eine Achse (4a, 6a) aufweist, die Einsenbahnräder (4, 6) trägt und vertikal beweglich ist, um die Eisenbahnräder (4, 6) in Eingriff mit dem Bahngleis (B) zu bringen, **dadurch gekennzeichnet, dass** ein mit mindestens hinteren Laufrädern (21) versehener Anhänger (20b) mit dem Zugfahrzeug (20a) mittels einer vor der hinteren Eisenbahnradeinrichtung (7) des Zugfahrzeugs (20a) angeordneten vertikalen drehbaren Achse (25) schwenkbar verbunden ist und dass der Anhänger (20b) hinter den hinteren Laufrädern (21) eine vertikal bewegliche dritte Eisenbahnradeinrichtung (22) aufweist, die um eine vertikale Achse (8) schwenken kann und die mindestens eine die Eisenbahnräder (23) tragende Achse (23a) aufweist.

2. Fahrzeug nach Anspruch 1, **dadurch gekennzeichnet, dass** mindestens eine der beiden hinteren Eisenbahnradeinrichtungen (7, 22) aus einem Drehgestell besteht, das zwei Eisenbahnradachsen (6a, 23a) aufweist.

3. Fahrzeug nach Anspruch 1 oder 2, **dadurch gekennzeichnet, dass** mindestens eine der beiden hinteren Eisenbahnradeinrichtungen (7, 22) einen Antriebsmotor zum Antreiben mindestens einer Eisenbahnradachse aufweist.

4. Fahrzeug nach einem der Ansprüche 1-3, **dadurch gekennzeichnet, dass** mindestens eine Eisenbahnradeinrichtung (5, 22), bevorzugt eine einachsige Eisenbahnradeinrichtung, ein nach außen schwenkbares Lagerelement mit einer ein Eisenbahnrad tragenden Achse zum Eingriff mit den Eisenbahnschienen bei Fahren des Fahrzeugs auf dem Bahngleis aufweist.

5. Fahrzeug nach Anspruch 4, **dadurch gekennzeichnet, dass** die mit dem Lagerelement versehene Eisenbahnradeinrichtung in ihrer Stellung parallel zu dem Bahngleis und der Längsachse des Fahrzeugs fixiert werden kann.

6. Fahrzeug nach Anspruch 1, **dadurch gekennzeichnet, dass** alle Eisenbahnradeinrichtungen (5, 7, 22) mit Antriebsmitteln versehen sind.

## Revendications

1. Véhicule, en particulier, ce que l'on appelle un semi-remorque (20) destiné à la conduite à la fois sur une route (A) et sur une voie de chemin de fer (B), ledit véhicule comportant un véhicule de traction (20a) ayant un châssis de roues et des essieux (2a) de roues avant dirigés et un essieu (3a) de roues arrière, tous deux disposant de roues (2, 3) pour la route, et des unités de roues pour le rail avant (5) et arrière (7), situées respectivement devant les roues avant (2) et derrière les roues arrière (3), dans lequel au moins une parmi lesdites unités peut être basculée autour d'un arbre vertical (8) et chacune des unités dispose d'au moins un essieu (4a, 6a) qui porte des roues (4, 6) pour le rail et qui est mobile verticalement afin d'amener la mise en prise des roues (4, 6) pour le rail avec la voie de chemin de fer (B), **caractérisé en ce qu'**une remorque (20b) prévue au moins avec des roues arrière (21) pour la route est raccordée de manière pivotante au véhicule de traction (20a) par le biais d'un essieu vertical (25) pouvant être mis en rotation situé devant l'unité (7) de roue arrière pour le rail du véhicule de traction (20a) ; et **en ce que** la remorque (20b) comporte, derrière les roues arrière (21) pour la route une troisième unité (22) de roue pour le rail mobile verticalement, qui peut basculer autour d'un essieu vertical (8) et qui comporte au moins un essieu (23a) portant des roues (23) pour le rail.

2. Véhicule selon la revendication 1, **caractérisé en ce qu'**au moins une parmi les deux unités (7, 22) de roues arrière pour le rail est composée d'un bogie qui a deux essieux (6a, 23a) de roues pour le rail.

3. Véhicule selon la revendication 1 ou 2, **caractérisé en ce qu'**au moins une parmi les deux unités (7, 22) de roues arrière pour le rail a un moteur d'entraînement destiné à entraîner au moins un essieu de roue pour le rail.

4. Véhicule selon l'une quelconque des revendications 1-3, **caractérisé en ce qu'**au moins une unité (5, 22) de roue pour le rail, de préférence une unité de roue pour le rail à essieu simple, comporte un élément de support pivotant vers l'extérieur ayant un axe portant une roue pour le rail destinée à une mise en prise avec les rails lors de la conduite du véhicule sur la voie de chemin de fer.

5. Véhicule selon la revendication 4, **caractérisé en ce que** l'unité -de roue pour le rail prévue avec ledit élément de support peut être fixée dans sa position parallèle à la voie de chemin de fer et avec l'axe longitudinal du véhicule.

6. Véhicule selon la revendication 1, **caractérisé en ce que** toutes les unités (5, 7, 22) de roues pour le rail sont prévues avec un moyen d'entraînement.
